(19) Europäisches Patentamt / European Patent Office / Office européen des brevets

(11) **EP 4 174 729 A1**

(12) **EUROPEAN PATENT APPLICATION**

(43) Date of publication:
**03.05.2023  Bulletin 2023/18**

(21) Application number: **22196800.1**

(22) Date of filing: **21.09.2022**

(51) International Patent Classification (IPC):
**G06N 5/025** (2023.01)      **G06N 5/045** (2023.01)

(52) Cooperative Patent Classification (CPC):
**G06N 5/025; G06N 5/045**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **29.10.2021  CN 202111276397**

(71) Applicant: **FUJITSU LIMITED**
**Kawasaki-shi, Kanagawa 211-8588 (JP)**

(72) Inventors:
• **Gao, Yue**
  **Beijing, 100027 (CN)**
• **Zhang, Shu**
  **Beijing, 100027 (CN)**
• **Sun, Jun**
  **Beijing, 100027 (CN)**

(74) Representative: **Hoffmann Eitle**
**Patent- und Rechtsanwälte PartmbB**
**Arabellastraße 30**
**81925 München (DE)**

(54) **INFORMATION PROCESSING METHOD AND DEVICE, AND STORAGE MEDIUM**

(57)  An information processing method and device, and a storage medium are provided. A method of explaining prediction results of a machine learning model includes: extracting a plurality of rules based on a training sample set for training the machine learning model and corresponding known labels; determining one or more matching rules to which a sample to be predicted conforms among the plurality of rules; generating an explanation model for the machine learning model, wherein the explanation model provides an explanation of a prediction result generated by the machine learning model with respect to a single sample to be predicted; generating counterfactual rules corresponding to the matching rules respectively; determining training samples conforming to one of the counterfactual rules, and forming a counterfactual candidate set including the determined training samples; and performing multi-objective optimization on the counterfactual candidate set based on a plurality of objective functions, to generate a counterfactual explanation. The counterfactual explanation provides conditions to be satisfied by the sample to be predicted in order to alter the prediction result.

FIG. 3

**Description**

**FIELD**

The present disclosure generally relates to information processing technology, and in particular to an information processing method and an information processing device for explaining process results of a machine learning model, as well as a storage medium.

**BACKGROUND**

With the development of machine learning techniques, artificial intelligence has been widely used in various fields. However, many machine learning models, such as neural network models, are black-box models. These black-box models usually have high prediction accuracy but fail to give specific explanations on how the prediction results have been generated, and therefore it is difficult to understand or trust the prediction results of these black-box models. In particular, in the application fields such as security, transportation, healthcare, finance, and the like, interpretability is an important measure of whether a black-box model is trustworthy.

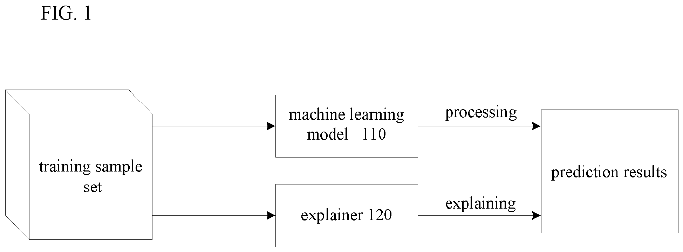

Therefore, techniques for explaining process results of machine learning models have received increasing attention in recent years. FIG. 1 is a schematic diagram illustrating an explainer that performs explanation. As shown in FIG. 1, a machine learning model 110, which is a black-box model, processes sample data to generate prediction results. An explainer 120 analyzes features of the sample data to explain how the prediction results of the machine learning model 110 have been generated.

The explanation techniques for machine learning models include global explanation techniques and local explanation techniques. The global explanation techniques provide a global explanation of a sample data set or overall behavior of the model. The local explanation techniques explain the prediction result with regard to a single sample, and therefore provide more accurate explanation and more personalized service for a single sample.

Local explanation techniques such as LIME method and SHAP method have been widely used, which are feature-based local explanation techniques and often ignore the correlation between features. Therefore, some rule-based explanation methods, such as Rulefit, GLRM, and Anchor have been developed recently. These explanation techniques are based on the "IF-THEN" rule to help users better understand the prediction mechanism of the machine learning model.

Further, users tend to care more about how they can change undesired prediction results than how the model generates the prediction results. For example, they may say "What do I have to do to reduce driving risk, reduce disease risk, or increase loan amount?" In response to this need, a rule-based counterfactual explanation approach is gaining attention. With this approach, users can be advised that "if one or more factors are changed, the result will be altered", so that the undesired predictions that may possibly be made by the machine learning model can be altered. However, the existing counterfactual explanation techniques are rarely rule-based and do not correspond to the rule-based explanation.

**SUMMARY**

In view of the technical problems discussed above, a rule-based counterfactual explanation solution is provided in the present disclosure. The solution can not only explain prediction results of a high-precision black-box model, but also provide a counterfactual explanation for a single sample. This counterfactual explanation indicates a condition to be satisfied in order to alter the prediction results.

A computer-implemented method of explaining prediction results of a machine learning model is provided according to an aspect of the present disclosure. The method includes: extracting information indicating a plurality of rules, based on training sample set data for training the machine learning model and corresponding known labels; determining one or more matching rules to which a sample to be predicted conforms among the plurality of rules, based on the information indicating the plurality of rules; generating an explanation model for the machine learning model, wherein the explanation model provides an explanation of a prediction result generated by the machine learning model with respect to a single sample to be predicted; generating information indicating one or more counterfactual rules corresponding to the one or more matching rules respectively; processing the training sample set data to determine training samples conforming to one of the counterfactual rules, and forming counterfactual candidate set data including the determined training samples; and performing multi-objective optimization on the counterfactual candidate set data based on a plurality of objective functions, to generate a counterfactual explanation. The counterfactual explanation provides conditions that the sample to be predicted is required to meet to change the prediction result.

A device of explaining prediction results of a machine learning model is provided according to another aspect of the present disclosure. The device includes: a memory storing a program, and one or more processors. The processor performs the following operations by executing the program: extracting information indicating a plurality of rules, based on training sample set data for training the machine learning model and corresponding known labels; determining one or more matching rules to which a sample to be predicted conforms among the plurality of rules, based on the information indicating the plurality of rules; generating an explanation model for the machine learning model, wherein the explanation model provides an explanation of a prediction result generated by the machine learning model with respect to a single sample to be predicted; generating information indicating one or more counterfactual rules corresponding to the one or more matching rules respectively; processing the training sample set data to determine training samples conforming to one of the counterfactual rules, and forming counterfactual candidate set data including the determined training samples; and performing multi-objective optimization on the counterfactual candidate set data based on a plurality of objective functions, to generate a counterfactual explanation. The counterfactual explanation provides conditions that the sample to be predicted is required to meet to change the prediction result.

A device of explaining prediction results of a machine learning model is provided according to another aspect of the present disclosure. The device includes: a rule extraction module, a matching rule extraction module, an explanation model generation module, a counterfactual rule generation module, a counterfactual candidate set generation module, and a counterfactual explanation generation module. The rule extraction module is configured to extract information indicating a plurality of rules, based on training sample set data for training the machine learning model and corresponding known labels. The matching rule extraction module is configured to determine one or more matching rules to which a sample to be predicted conforms among the plurality of rules, based on the information indicating the plurality of rules. The explanation model generation module is configured to generate an explanation model for the machine learning model. The explanation model provides an explanation of a prediction result generated by the machine learning model with respect to a single sample to be predicted. The counterfactual rule generation module is configured to generate information indicating one or more counterfactual rules corresponding to the one or more matching rules respectively. The counterfactual candidate set generation module is configured to process the training sample set data to determine training samples conforming to one of the counterfactual rules, and form counterfactual candidate set data including the determined training samples. The counterfactual explanation generation module is configured to perform multi-objective optimization on the counterfactual candidate set data based on a plurality of objective functions, to generate a counterfactual explanation. The counterfactual explanation provides conditions that the sample to be predicted is required to meet to change the prediction result.

A computer program capable of implementing the method of explanting prediction results of a machine learning model is provided according to a further aspect of the present disclosure. A computer program product in the form of a computer-readable medium on which the computer program is stored is further provided according to the present disclosure.

**BRIEF DESCRIPTION OF THE DRAWINGS**

The above and other objects, features and advantages of the present disclosure will be more readily understood with reference to the following description of embodiments of the present disclosure in conjunction with the drawings. In the drawings:

FIG. 1 is a schematic illustration of an explainer explaining prediction results of a machine learning model;

FIG. 2 a flowchart illustrating an explanation method according to the present disclosure;

FIG. 3 is a conceptual block diagram schematically illustrating the explanation method according to the present disclosure;

FIG. 4 illustrates an example of the explanation method according to the present disclosure applied in the field of traffic safety;

FIG. 5 schematically illustrates modules of an explanation system according to the present disclosure; and

FIG. 6 is a block diagram illustrating a configuration of computer hardware for implementing the present disclosure.

**DETAILED DESCRIPTION OF EMBODIMENTS**

In the following, embodiments according to the present disclosure will be described in detail with reference to the drawings. In the drawings, identical or similar components are indicated by the same or similar reference numerals. In addition, known techniques and configurations incorporated are not described in detail herein so as to avoid obscuring the subject matter of the present disclosure.

The terms herein are solely for the purpose of describing a particular embodiment and are not intended to limit the present disclosure. Unless the context clearly indicates otherwise, expressions in the singular form also include the plural form. In addition, the terms "includes," "comprises," and "has" herein are intended to denote the presence of the described features, entities, operations, and/or components, rather than exclude the presence or addition of one or more other features, entities, operations, and/or components.

In the following description, many specific details are described to provide a comprehensive understanding of the present disclosure. However, it is possible to implement the present disclosure without some or all of the specific details. In the drawings, only components closely related to the embodiments according to the present disclosure are illustrated while other details of little relevance to the present disclosure are not shown.

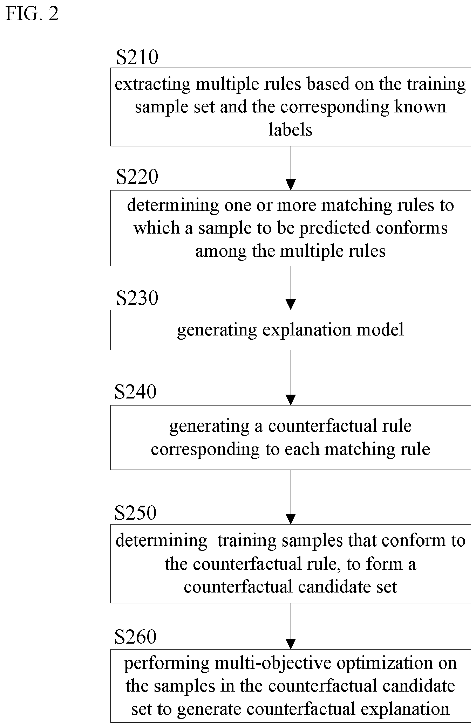

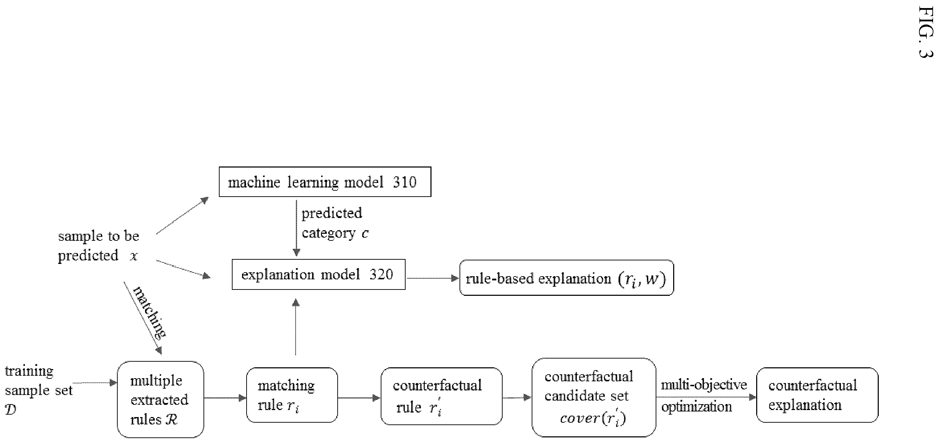

FIG. 2 is a flowchart illustrating an explanation method according to the present disclosure. FIG. 3 is a block diagram schematically illustrating a concept of the explanation method according to the present disclosure.

Referring to FIG. 2 and 3, there is a machine learning model 310 as a black-box model, and a training sample set $\mathcal{D}$ for training the machine learning model 310. Each training sample has one or more features. In an example, the machine learning model 310 may be a model for assessing people's credit. In this example, the training samples are people and may include features such as "gender", "age", "income status", and "marital status".

In step S210, a plurality of rules are extracted based on samples in the training sample set $\mathcal{D}$ and corresponding known labels. The set of the extracted rules is denoted as $\mathcal{R}$. For example, the rules may be extracted by using known methods such as rule mining, which is not limited herein. Each rule in the set $\mathcal{R}$ includes one or more features each satisfying a respective condition and a category c predicted based on the features. In an example, the machine learning model 310 may be a model for assessing driving risk of a driver. In this example, a rule may include for example the features "fatigue driving" = "true", "night driving" = "often ", and a prediction result "high risk" based on the features.

A sample to be predicted is denoted as $\mathcal{X}$. In step S220, one or more matching rules to which the sample to be predicted $\mathcal{X}$ conforms are determined among the set $\mathcal{R}$. The set of determined matching rules is denoted as $\mathcal{R}_{\text{x}}$. For example, if the sample to be predicted $\mathcal{X}$ conforms to "fatigue driving = true" and "night driving = often", the above example rule may be determined to be a matching rule to which the sample to be predicted $\mathcal{X}$ conforms.

In step S230, an explanation model 320 for explaining a processing result of the machine learning model 310 is generated. In an example, local explanation is discussed herein, that is, the explanation model 320 explains a prediction result generated by the machine learning model 310 for a single sample to be predicted. The process of generating the explanation model 320 is described in detail below.

First, it is determined whether a sample d in the training sample set $\mathcal{D}$ conforms to the matching rule $\mathcal{R}_{\text{x}}$ associated with the sample $\mathcal{X}$ to be predicted. An indication function z(d) is generated based on the result of determination. The function z(d) has a value of 1 in a case that the sample d conforms to the matching rules $\mathcal{R}_{\text{x}}$ and has a value of 0 in a case that the sample d does not conform to the matching rule $\mathcal{R}_{\text{x}}$.

A linear model is then used to fit a prediction result C generated by the machine learning model 310 for the sample $\mathcal{X}$ to be predicted, to generate the explanation model 320. The linear model is represented by the mathematical formula (1).

$$g(d) = \alpha_0 + \sum_{k=1}^{K} \alpha_k d_k + \sum_{i=1}^{I} w_i z_i(d) \qquad (1)$$

In the mathematical formula (1), $d_k$ denotes a feature of the $k^{\text{th}}$ dimension in the training sample d, $z_i(d)$ denotes whether the sample d conforms to the $i^{\text{th}}$ rule in the matching rules $\mathcal{R}_{\text{x}}$, $\alpha_k$ and $w_i$ each denote a weight, and $\alpha_0$ denotes a predefined constant.

A loss function represented by the mathematical formula (2) may be used in the fitting process.

$$\mathcal{L}(f, g) = \sum_{d \in \mathcal{D}} \big(f(d) - g(d)\big)^2 \qquad (2)$$

In mathematical formula (2), f(d) denotes a prediction result of the machine learning model 310 with respect to the training sample d.

The explanation model 320 generated in step S230 may provide an explanation including: one or more matching rules to which the sample $\mathcal{X}$ to be predicted conforms, and a weight w for each matching rule. Therefore, the explanation may be expressed as e = ($r_1$, w). The user (sample $\mathcal{X}$ to be predicted) may learn from the explanation that the reason for the prediction result may be that the user conforms to the given matching rules, and may understand from the weight w that which matching rule(s) may have played a greater role in generating the final prediction result.

In this way, the rule-based explanation for the prediction results of the machine learning model may be achieved with the explanation method according to the present disclosure.

Next, in step S240, for each matching rule $r_i$ among the matching rules $\mathcal{R}_{\mathrm{x}}$, a counterfactual rule $r_i'$ corresponding to the matching rule $r_i$ is generated according to the mathematical formula (3).

$$r_i' = \neg r_i^{\neg c} \qquad (3)$$

Specifically, the matching rule $r_i$ and the counterfactual rule $r_i'$ corresponding to each other include the same features, and each feature satisfies opposite conditions between the matching rule $r_i$ and counterfactual rule $r_i'$, such that the predicted classification results are different between the matching rule $r_i$ and the counterfactual rule $r_i'$. For example, the matching rule $r_i$ includes features "average speed while speeding" > 100km/h, "average daily mileage" > 21,000m, and a prediction result "high risk". The counterfactual rule $r_i'$ corresponding to the matching rule $r_i$ includes features "average speed while speeding" $\leq$ 100km/h, "average daily mileage" $\leq$ 21,000m, and a prediction result "low risk". It should be noted that the present disclosure is not limited to the case where the prediction results are opposite to each other, but is applicable as long as the prediction results are different from each other. For example, the prediction result in the matching rule $r_i$ may be at a first level, while the prediction result in the counterfactual rule $r_i'$ may be at a second level.

Then in step S250, training samples that conform to the counterfactual rule $r_i'$ are determined in the training sample set $\mathcal{D}$. The determined training samples form a counterfactual candidate set $\mathrm{cover}(r_i')$. Each of the samples in the counterfactual candidate set $\mathrm{cover}(r_i')$ does not conform to the conditions and prediction result in the matching rule $r_i$ corresponding to the counterfactual rule $r_i'$.

Then in step S260, multi-objective optimization is performed on the samples in the counterfactual candidate set $\mathrm{cover}(r_i')$ to generate counterfactual explanation. The generated counterfactual explanation indicates, for the sample $\mathcal{X}$ to be predicted, a condition to be satisfied in order to alter the prediction result made by the machine learning model 310. For example, if the predicted category for a user (sample $\mathcal{X}$ to be predicted) made by the machine learning model 310 is "high risk" and thus the user may have difficulty in purchasing insurance, the counterfactual explanation provided by the present disclosure can explain to the user what condition(s) should be satisfied in order to change the prediction result of "high risk". That is, the user may need to make changes in "fatigue driving", "speeding" and the like, until the conditions required for "low risk" are satisfied. In this aspect, the provided counterfactual explanation may include a plurality of features that satisfy respective conditions.

In order to acquire the counterfactual explanation, the present disclosure is based on a principle of minimizing a difference between a condition satisfied by the feature in the counterfactual explanation and a condition satisfied by the feature of the sample $\mathcal{X}$ to be predicted, and meanwhile maximizing a difference between a prediction result for the feature in the counterfactual explanation made by the machine learning model 310 and an original prediction result for the sample $\mathcal{X}$ to be predicted made by the machine learning model 310. Therefore, the user may acquire the largest change in the prediction result with the smallest change in the features thereof. That is, the user may acquire the desired result with smallest effort.

Specifically, objective functions may be represented by the mathematical formulas (4) and (5).

$$\min L(x, x') = dist(x, x') \qquad (4)$$

$$\max L(f(x), f(x')) = |f(x)\text{-}f(x')| \qquad (5)$$

In the mathematical formulas (4) and (5), x represents the sample to be predicted, x' represents a training sample in the counterfactual candidate set $\mathrm{cover}(r_i')$ , *dist(x, x')* represents a distance between x and x', and *f()* represents a prediction result generated by the machine learning model 310.

As an example of multi-objective optimization algorithm, multi-objective Pareto optimization algorithm may be used, such as ε-constraint method, Weighted Metric Method, Multi-Objective Genetic Algorithm, etc. Accordingly, the computed Pareto optimal solution may serve as the counterfactual explanation.

As described above, in steps S240 to S260, for each matching rule $r_i$ in the matching rules $\mathcal{R}_x$ , a corresponding counterfactual rule is generated, so as to form the counterfactual candidate set $\mathrm{cover}(r_i')$ . Then, multi-objective optimization is performed on the training samples in the counterfactual candidate set $\mathrm{cover}(r_i')$ to obtain the counterfactual explanation. In this way, the multi-objective Pareto optimal solution is computed for all matching rules in the matching rules $\mathcal{R}_{x'}$ , as the counterfactual explanations. The obtained multiple counterfactual explanations and their respective weights are provided to the user. Specifically, for a counterfactual explanation corresponding to a specific counterfactual rule $r_s'$, it may be assigned a weight which is a difference between a prediction result for the training sample in the counterfactual candidate set $\mathrm{cover}(r_s')$ corresponding to the specific counterfactual rule $r_s'$ and a prediction result for the sample $\mathcal{X}$ to be predicted. When the difference between the prediction result for the training sample in the counterfactual candidate set $\mathrm{cover}(r_s')$ and the prediction result for the sample $\mathcal{X}$ to be predicted is large, the weight is large. This indicates that the corresponding counterfactual explanation is preferable (because the prediction result is changed by a large amount).

The counterfactual explanation indicates the condition to be satisfied in order to alter the prediction result. Therefore, the weight of each counterfactual explanation is provided together with the counterfactual explanations to the user, so that the user can easily understand which improvement scheme is preferable.

The basic process of the explanation method according to the present disclosure has been described above in conjunction with FIG. 2 and FIG. 3, and further improvements are described below.

As described above, the explanation model 320 provides the explanation e = ($r_i$, w) including matching rules and the corresponding weights in step S230. Preferably, the matching rules are filtered based on the weights w. For example, only matching rules with a weight w greater than a predetermined threshold may be selected. Then, the selected matching rules are presented to the user. In this way, the user can easily understand the rules that may have played a relatively important role in the generation of the final prediction result without being confused by a large number of rules given.

Furthermore, the counterfactual rules are generated only for the selected matching rules to obtain counterfactual explanations. In this way, an amount of computation in the subsequent steps S240 to S260 can be reduced.

In addition, if the training sample in the counterfactual candidate set $\mathrm{cover}(r_i')$ generated in step S250 includes a large number of features, an amount of computation when computing the multi-objective Pareto optimal solution in step S260 will be large. In order to reduce the amount of computation, it is preferable to cancel some features of the training sample.

First, for each matching rule $r_i$ in the matching rules related to the sample $\mathcal{X}$ to be predicted, a correlation between all features of the training sample set $\mathcal{D}$ and the features included in the matching rule $r_i$ is calculated. Then, for each training sample d in the training sample set $\mathcal{D}$ , a feature for which the calculated correlation is lower than a predetermined threshold among the features of the training sample d is removed. Next, the counterfactual candidate set may be formed according to step S250 based on the training sample set $\mathcal{D}$ with certain features canceled, and then the counterfactual explanation is obtained according to step S260.

By canceling features in each training sample that are not highly correlated with the current sample $\chi$ to be predicted, it is possible not only to greatly reduce the amount of computation in computing the multi-objective Pareto optimal solution, but also to prevent the user (sample $\chi$ to be predicted) from being confused by a large number of features included in the counterfactual explanation provided to the user.

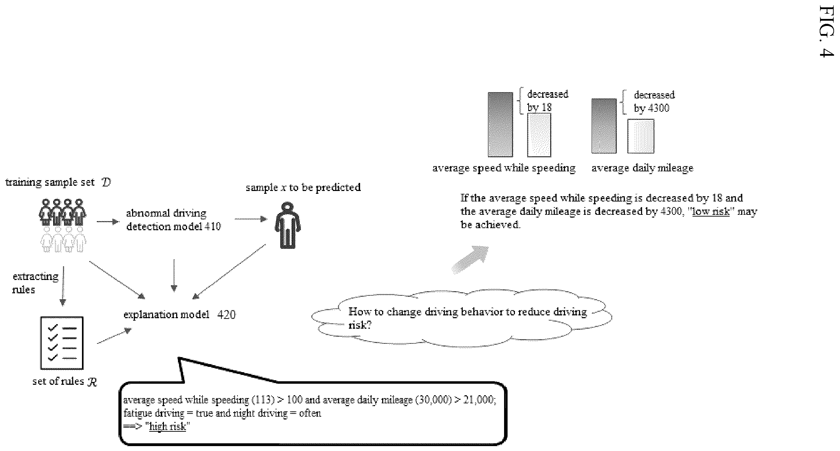

FIG. 4 illustrates an example of the explanation method according to the present disclosure in the field of traffic safety. As shown in FIG. 4, an abnormal driving detection model 410 predicts a driving risk of the user (sample $\chi$ to be predicted). A rule-based explanation model 420 explains the predicted result. The explanation includes that the user conforms to two rules, "average speed while speeding (113) >100 and average daily mileage (30,000)>21,000", and "fatigue driving = true and night driving = often". Therefore, the abnormal driving detection model 410 generates a prediction result of "high-risk driving" for the user.

The prediction result of "high risk" may cause the user to pay high premiums when purchasing vehicle insurance or even make it difficult for the user to purchase the insurance, and therefore the user may want to know how to change driving behavior so as to reduce the driving risk. In this regard, the counterfactual explanation may offer the user an improvement scheme of reducing the average speed while speeding by 18 and reducing the average daily mileage by 4300, for the first rule. If the user can meet such requirements, the prediction result of the abnormal driving detection model 410 will likely change to "low risk".

In addition to the transportation field, the technology of the present disclosure is also applicable to various fields such as medical treatment, industrial control, and finance.

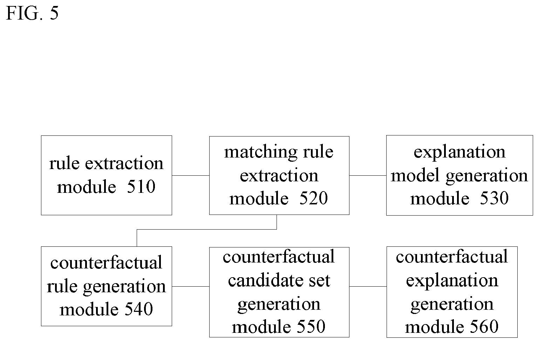

FIG. 5 schematically illustrates modules of a rule-based explanation system according to the present disclosure. As shown in FIG. 5, the system includes a rule extraction module 510 for performing step S210 in FIG. 2, a matching rule extraction module 520 for performing step S220, and an explanation model generation module 530 for performing step S230, a counterfactual rule generation module 540 for performing step S240, a counterfactual candidate set generation module 550 for performing step S250, and a counterfactual explanation generation module 560 for performing step S260.

The method described in the above embodiments may be implemented by software, hardware, or a combination of software and hardware. A program included in the software may be stored in advance in a storage medium provided inside or outside the device. In an example, the program is written to a random-access memory (RAM) and executed by a processor (e.g., a CPU) during execution, so as to implement the various processing described herein.

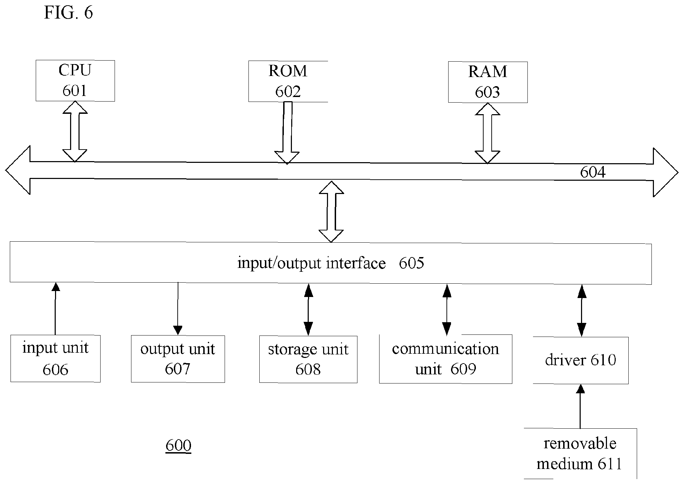

FIG. 6 is a block diagram illustrating a configuration of computer hardware for implementing the method according to the present disclosure. The computer hardware is an example of a device of explaining prediction results of a machine learning model according to the present disclosure.

As shown in FIG. 6, in a computer 600, a central processing unit (CPU) 601, a read only memory (ROM) 602, and a random-access memory (RAM) 603 are connected to each other via a bus 604.

An input/output interface 605 is further connected to the bus 604. The input/output interface 605 is connected to the following components: an input unit 606 including a keyboard, a mouse, a microphone or the like; an output unit 607 including a display, a speaker or the like; a storage unit 608 including a hard disk, a non-volatile memory or the like; a communication unit 609 including a network interface card (such as a local area network (LAN) card or a modem); and a driver 610 that drives a removable medium 611. The removable medium 611 is, for example, a magnetic disk, an optical disk, a magneto-optical disk, or a semiconductor memory.

In the computer having the above structure, the CPU 601 loads the program stored in the storage unit 608 into the RAM 603 via the input/output interface 605 and the bus 604, and executes the program so as to implement the method described above.

The program to be executed by the computer (CPU 601) may be recorded on the removable medium 611 as a package medium. The package medium is formed with, for example, a magnetic disk (including a floppy disk), an optical disk (including a compact disk-read only memory (CD-ROM), a digital versatile disk (DVD) or the like), a magneto-optical disk, or a semiconductor memory. Furthermore, the program to be executed by the computer (CPU 601) may also be provided via a wired or wireless transmission medium such as a local area network, the Internet, or digital satellite broadcasting.

In a case that the removable medium 611 is installed in the driver 610, the program may be installed in the storage unit 608 via the input/output interface 605. In addition, the program may be received by the communication unit 609 via a wired or wireless transmission medium and installed in the storage unit 608. Alternatively, the program may be preinstalled in the ROM 602 or the storage unit 608.

The program to be executed by the computer may be a program that implements processing in the order described in this specification, or may be a program that implements processing in parallel or when necessary, such as when invoked.

The unit or device herein is described only in a logical sense and do not correspond strictly to physical device or entity. For example, the function of each unit described herein may be implemented by a number of physical entities. Alternatively, functions of a number of units described herein may be implemented by a single physical entity. In addition, the features, components, elements, steps or the like described in one embodiment are not limited to that embodiment and may be applied to other embodiments, such as replacing or combining with particular features, components, elements, steps or the like in another embodiment.

The scope of the present disclosure is not limited to the specific embodiments described herein. It should be understood by those skilled in the art that, depending on design requirements and other factors, various modifications or variations may be made to the embodiments herein without departing from the principles and gist of the present disclosure. The scope of the present disclosure is limited by the appended claims and their equivalent solutions.

Appendix

(1). A computer-implemented method of explaining prediction results of a machine learning model, including:

extracting information indicating a plurality of rules, based on training sample set data for training the machine learning model and corresponding known labels;

determining one or more matching rules to which a sample to be predicted conforms among the plurality of rules, based on the information indicating the plurality of rules;

generating an explanation model for the machine learning model, wherein the explanation model provides an explanation of a prediction result generated by the machine learning model with respect to a single sample to be predicted;

generating information indicating one or more counterfactual rules corresponding to the one or more matching rules respectively;

processing the training sample set data to determine training samples conforming to one of the counterfactual rules, and forming counterfactual candidate set data including the determined training samples; and

performing multi-objective optimization on the counterfactual candidate set data based on a plurality of objective functions, to generate a counterfactual explanation, wherein the counterfactual explanation provides conditions that the sample to be predicted is required to meet to change the prediction result.

(2). The method according to (1), further including:

constructing a linear model based on training samples in the training sample set data and based on whether the training sample conforms to the matching rules; and

fitting the prediction results of the machine learning model using the linear model, to generate the explanation model.

(3). The method according to (1), wherein the explanation provided by the explanation model includes each matching rule to which the sample to be predicted conforms and a weight corresponding to the matching rule, wherein the method further including:

filtering the matching rules to which the sample to be predicted conforms, based on the weights; and generating information indicating counterfactual rules corresponding to the filtered matching rules.

(4). The method according to (2), wherein in the fitting, a difference between a prediction result generated by the linear model with respect to a training sample in the training sample set data and a prediction result generated by the machine learning model with respect to the same training sample is minimized.

(5). The method according to (1), wherein

the matching rule and the counterfactual rule that correspond to each other include one or more same features, while each of the features meets opposite conditions between the matching rule and the counterfactual rule, and the matching rule and the counterfactual rule that correspond to each other further include prediction results different from each other.

(6). The method according to (1), wherein a first objective function among the plurality of objective functions corresponds to minimization of a distance between a training sample in the counterfactual candidate set data and the sample to be predicted, and a second objective function among the plurality of objective functions corresponds to maximization of a difference between a prediction result generated by the machine learning model with respect to the training sample in the counterfactual candidate set data and the prediction result generated by the machine learning model with respect to the sample to be predicted.

(7). The method according to (1), wherein the multi-objective optimization includes multi-objective Pareto optimization, and the counterfactual explanation is generated based on calculated Pareto optimal solution.

(8). The method according to (5), further including:

calculating correlations between features included in each of the matching rules and all features that the training sample set data have;

for each training sample in the training sample set data, deleting, among its features, a feature for which the correlation is lower than a predetermined threshold; and

forming the counterfactual candidate set data based on the training sample set data for which the features have been deleted, and preforming the multi-objective optimization.

(9). The method according to (1), further including:

when there are a plurality of matching rules and a plurality of counterfactual rules corresponding to the matching rules respectively,

forming a counterfactual candidate set data for each of the counterfactual rules, and then generating a plurality of counterfactual explanations; and

providing the plurality of counterfactual explanations based on weights,

wherein a difference between a prediction result of a training sample in a counterfactual candidate set corresponding to a specific counterfactual rule and a prediction result of the sample to be predicted is used as a weight for a counterfactual explanation corresponding to the specific counterfactual rule.

(10). The method according to (1), wherein the counterfactual explanation provides conditions that the sample to be predicted is required to meet to obtain a prediction result opposite to the prediction result.

(11). A device for explaining prediction results of a machine learning model, including:

a memory storing a program; and

one or more processors that perform following operations by executing the program:

extracting information indicating a plurality of rules, based on training sample set data for training the machine learning model and corresponding known labels;

determining one or more matching rules to which a sample to be predicted conforms among the plurality of rules, based on the information indicating the plurality of rules;

generating an explanation model for the machine learning model, wherein the explanation model provides an explanation of a prediction result generated by the machine learning model with respect to a single sample to be predicted;

generating information indicating one or more counterfactual rules corresponding to the one or more matching rules respectively;

processing the training sample set data to determine training samples conforming to one of the counterfactual rules, and forming counterfactual candidate set data including the determined training samples; and

performing multi-objective optimization on the counterfactual candidate set data based on a plurality of objective functions, to generate a counterfactual explanation, wherein the counterfactual explanation provides conditions that the sample to be predicted is required to meet to change the prediction result.

(12). A device of explaining prediction results of a machine learning model, including:

a rule extraction module configured to extract information indicating a plurality of rules, based on training sample set data for training the machine learning model and corresponding known labels;

a matching rule extraction module configured to determine one or more matching rules to which a sample to be predicted conforms among the plurality of rules, based on the information indicating the plurality of rules;

an explanation model generation module configured to generate an explanation model for the machine learning model, wherein the explanation model provides an explanation of a prediction result generated by the machine learning model with respect to a single sample to be predicted;

a counterfactual rule generation module configured to generate information indicating one or more counterfactual rules corresponding to the one or more matching rules respectively;

a counterfactual candidate set generation module configured to process the training sample set data to determine training samples conforming to one of the counterfactual rules, and form counterfactual candidate set data including the determined training samples; and

a counterfactual explanation generation module configured to perform multi-objective optimization on the counterfactual candidate set data based on a plurality of objective functions, to generate a counterfactual explanation, wherein the counterfactual explanation provides conditions that the sample to be predicted is required to meet to change the prediction result.

(13). A storage medium storing a computer program that, when executed by a computer, causes the computer to perform the method of explaining prediction results of a machine learning model according to any one of (1) to (10).

## Claims

1. A computer-implemented method of explaining prediction results of a machine learning model, comprising:

extracting information indicating a plurality of rules, based on training sample set data for training the machine learning model and corresponding known labels;
determining one or more matching rules to which a sample to be predicted conforms among the plurality of rules, based on the information indicating the plurality of rules;
generating an explanation model for the machine learning model, wherein the explanation model provides an explanation of a prediction result generated by the machine learning model with respect to a single sample to be predicted;
generating information indicating one or more counterfactual rules corresponding to the one or more matching rules respectively;
processing the training sample set data to determine training samples conforming to one of the counterfactual rules, and forming counterfactual candidate set data comprising the determined training samples; and
performing multi-objective optimization on the counterfactual candidate set data based on a plurality of objective functions, to generate a counterfactual explanation, wherein the counterfactual explanation provides conditions that the sample to be predicted is required to meet to change the prediction result.

2. The method according to claim 1, further comprising:

constructing a linear model based on training samples in the training sample set data and based on whether the training sample conforms to the matching rules; and

fitting the prediction results of the machine learning model using the linear model, to generate the explanation model.

3. The method according to claim 1, wherein the explanation provided by the explanation model comprises each matching rule to which the sample to be predicted conforms and a weight corresponding to the matching rule, the method further comprising:

filtering the matching rules to which the sample to be predicted conforms, based on the weights; and generating information indicating counterfactual rules corresponding to the filtered matching rules.

4. The method according to claim 2, wherein in the fitting, a difference between a prediction result generated by the linear model with respect to a training sample in the training sample set data and a prediction result generated by the machine learning model with respect to the same training sample is minimized.

5. The method according to claim 1, wherein

the matching rule and the counterfactual rule that correspond to each other comprise one or more same features, while each of the features meets opposite conditions between the matching rule and the counterfactual rule, and the matching rule and the counterfactual rule that correspond to each other further comprise prediction results different from each other.

6. The method according to claim 1, wherein a first objective function among the plurality of objective functions corresponds to minimization of a distance between a training sample in the counterfactual candidate set data and the sample to be predicted, and a second objective function among the plurality of objective functions corresponds to maximization of a difference between a prediction result generated by the machine learning model with respect to the training sample in the counterfactual candidate set data and the prediction result generated by the machine learning model with respect to the sample to be predicted.

7. The method according to claim 1, wherein the multi-objective optimization comprises multi-objective Pareto optimization, and the counterfactual explanation is generated based on calculated Pareto optimal solution.

8. The method according to claim 5, further comprising:

calculating correlations between features comprised in each of the matching rules and all features that the training sample set data have;

for each training sample in the training sample set data, deleting, among its features, a feature for which the correlation is lower than a predetermined threshold; and

forming the counterfactual candidate set data based on the training sample set data for which the features have been deleted, and preforming the multi-objective optimization.

9. A device for explaining prediction results of a machine learning model, comprising:

a memory storing a program; and

one or more processors that perform following operations by executing the program:

extracting information indicating a plurality of rules, based on training sample set data for training the machine learning model and corresponding known labels;

determining one or more matching rules to which a sample to be predicted conforms among the plurality of rules, based on the information indicating the plurality of rules;

generating an explanation model for the machine learning model, wherein the explanation model provides an explanation of a prediction result generated by the machine learning model with respect to a single sample to be predicted;

generating information indicating one or more counterfactual rules corresponding to the one or more matching rules respectively;

processing the training sample set data to determine training samples conforming to one of the counterfactual rules, and forming counterfactual candidate set data comprising the determined training samples; and

performing multi-objective optimization on the counterfactual candidate set data based on a plurality of objective functions, to generate a counterfactual explanation, wherein the counterfactual explanation provides conditions that the sample to be predicted is required to meet to change the prediction result.

10. A storage medium storing a computer program that, when executed by a computer, causes the computer to perform the method of explaining prediction results of a machine learning model according to any one of claims 1 to 8.

FIG. 1

FIG. 2

S210

| extracting multiple rules based on the training sample set and the corresponding known labels |
|---|

S220

| determining one or more matching rules to which a sample to be predicted conforms among the multiple rules |
|---|

S230

| generating explanation model |
|---|

S240

| generating a counterfactual rule corresponding to each matching rule |
|---|

S250

| determining training samples that conform to the counterfactual rule, to form a counterfactual candidate set |
|---|

S260

| performing multi-objective optimization on the samples in the counterfactual candidate set to generate counterfactual explanation |
|---|

FIG. 3

machine learning model 310

predicted category $c$

explanation model 320

rule-based explanation $(r_i, w)$

sample to be predicted $x$

matching

training sample set $\mathcal{D}$

multiple extracted rules $\mathcal{R}$

matching rule $r_i$

counterfactual rule $r_i'$

counterfactual candidate set $cover(r_i')$

multi-objective optimization

counterfactual explanation

FIG. 4

FIG. 5

```
┌──────────────────┐   ┌──────────────────┐   ┌──────────────────┐
│  rule extraction │   │  matching rule   │   │   explanation    │
│  module  510     ├───┤  extraction      ├───┤ model generation │
│                  │   │  module  520     │   │  module  530     │
└──────────────────┘   └────────┬─────────┘   └──────────────────┘
                                │
┌──────────────────┐   ┌────────┴─────────┐   ┌──────────────────┐
│  counterfactual  │   │  counterfactual  │   │  counterfactual  │
│  rule generation ├───┤  candidate set   ├───┤   explanation    │
│  module 540      │   │  generation      │   │   generation     │
│                  │   │  module 550      │   │  module 560      │
└──────────────────┘   └──────────────────┘   └──────────────────┘
```

FIG. 6

```
┌─────────┐              ┌─────────┐              ┌─────────┐
│   CPU   │              │   ROM   │              │   RAM   │
│   601   │              │   602   │              │   603   │
└────╥────┘              └────╥────┘              └────╥────┘
     ⇕                        ⇓                        ⇕
◁═══════════════════════════════════════════════════════════════════▷  604
                              ⇕
┌──────────────────────────────────────────────────────────────────┐
│                   input/output interface   605                    │
└──────────────────────────────────────────────────────────────────┘
     ↑           ↓           ↕           ↕           ↕
┌─────────┐ ┌─────────┐ ┌─────────┐ ┌────────────┐ ┌──────────┐
│input unit│ │output unit│ │storage unit│ │communication│ │driver 610│
│   606   │ │   607   │ │   608   │ │ unit  609  │ └──────────┘
└─────────┘ └─────────┘ └─────────┘ └────────────┘      ↑
                                                  ┌────────────┐
              600                                 │ removable  │
                                                  │medium 611  │
                                                  └────────────┘
```

Europäisches
Patentamt

European
Patent Office

Office européen
des brevets

# EUROPEAN SEARCH REPORT

**Application Number**

EP 22 19 6800

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | RICCARDO GUIDOTTI ET AL: "Local Rule-Based Explanations of Black Box Decision Systems", ARXIV.ORG, CORNELL UNIVERSITY LIBRARY, 201 OLIN LIBRARY CORNELL UNIVERSITY ITHACA, NY 14853, 28 May 2018 (2018-05-28), XP080883047, * the whole document * | 1-10 | INV. G06N5/025 G06N5/045 |
| A | RICCARDO GUIDOTTI ET AL: "Black Box Explanation by Learning Image Exemplars in the Latent Feature Space", 30 April 2020 (2020-04-30), 16TH EUROPEAN CONFERENCE - COMPUTER VISION - ECCV 2020, CORNELL UNIVERSITY LIBRARY, 201 OLIN LIBRARY CORNELL UNIVERSITY ITHACA, NY 14853, PAGE(S) 189 - 205, XP047553484, [retrieved on 2020-04-30] * the whole document * | 1-10 | |
| A | RICCARDO GUIDOTTI ET AL: "Explaining Any Time Series Classifier", 2020 IEEE SECOND INTERNATIONAL CONFERENCE ON COGNITIVE MACHINE INTELLIGENCE (COGMI), IEEE, 28 October 2020 (2020-10-28), pages 167-176, XP033879737, DOI: 10.1109/COGMI50398.2020.00029 [retrieved on 2021-01-08] * the whole document * ----- | 1-10 | **TECHNICAL FIELDS SEARCHED (IPC)** G06N |

-/--

The present search report has been drawn up for all claims

| Place of search | Date of completion of the search | Examiner |
|---|---|---|
| The Hague | 20 February 2023 | Moro Pérez, Gonzalo |

EPO FORM 1503 03.82 (P04C01)

page 1 of 2

Europäisches
Patentamt

European
Patent Office

Office européen
des brevets

# EUROPEAN SEARCH REPORT

Application Number

EP 22 19 6800

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | FRANCESCO BODRIA ET AL: "Benchmarking and Survey of Explanation Methods for Black Box Models", ARXIV.ORG, CORNELL UNIVERSITY LIBRARY, 201 OLIN LIBRARY CORNELL UNIVERSITY ITHACA, NY 14853, 25 February 2021 (2021-02-25), XP081892413, * the whole document * | 1-10 | |
| A | LI XIAO-HUI ET AL: "A Survey of Data-Driven and Knowledge-Aware eXplainable AI", IEEE TRANSACTIONS ON KNOWLEDGE AND DATA ENGINEERING, IEEE SERVICE CENTRE , LOS ALAMITOS , CA, US, vol. 34, no. 1, 30 March 2020 (2020-03-30) , pages 29-49, XP011892342, ISSN: 1041-4347, DOI: 10.1109/TKDE.2020.2983930 [retrieved on 2021-12-06] * the whole document * | 1-10 | **TECHNICAL FIELDS SEARCHED (IPC)** |

The present search report has been drawn up for all claims

| Place of search | Date of completion of the search | Examiner |
|---|---|---|
| The Hague | 20 February 2023 | Moro Pérez, Gonzalo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)